(19) Europäisches Patentamt
European Patent Office
Office européen des brevets

(11) Veröffentlichungsnummer: **0 023 650 B2**

(12) **NEUE EUROPÄISCHE PATENTSCHRIFT**

(45) Veröffentlichungstag der neuen Patentschrift: **16.08.90**

(51) Int. Cl.⁵: **C 08 L 69/00,** C 08 K 5/42, C 08 K 5/51

(21) Anmeldenummer: **80104237.5**

(22) Anmeldetag: **18.07.80**

(54) **Verwendung von Alkali- und Erdalkalisalzen alkylsubstituierter aromatischer Sulfonsäuren, Phosphonsäuren und saurer Phosphorsäureester als interne Antistatika für Polycarbonatfolien.**

(30) Priorität: **01.08.79 DE 2931172**

(43) Veröffentlichungstag der Anmeldung:
**11.02.81 Patentblatt 81/06**

(45) Bekanntmachung des Hinweises auf die Patenterteilung:
**22.06.83 Patenblatt 83/25**

(45) Bekanntmachung des Hinweises auf die Entscheidung über den Einspruch:
**16.08.90 Patentblatt 90/33**

(84) Benannte Vertragsstaaten:
**DE FR GB IT NL**

(56) Entgegenhaltungen:
**BE-A- 670 721**
**DD-A- 116 062**
**DE-A-1 694 161**
**DE-A-2 648 128**
**GB-A-1 357 567**
**US-A-3 560 591**
**US-A-3 933 734**

**CHEMICAL ABSTRACTS, Band 80, Nr. 2, 14. Januar 1974, Seite 61, Zusammenfassung Nr. 4573p, Columbus, Ohio, US**

**Die Akte enthält technische Angaben, die nach dem Eingang der Anmeldung eingereicht wurden und die nicht in dieser Patentschrift enthalten sind.**

(73) Patentinhaber: **BAYER AG**
**D-5090 Leverkusen 1 Bayerwerk (DE)**

(72) Erfinder: **Schmidt, Manfred, Dr.**
**Bodelschwinghstrasse 20**
**D-4150 Krefeld (DE)**
Erfinder: **Wank, Joachim**
**Zülpicher-Strasse 7**
**D-4047 Dormagen-Zons (DE)**
Erfinder: **Reese, Eckart, Dr.**
**Aggerstrasse 22**
**D-4047 Dormagen (DE)**
Erfinder: **Freitag, Dieter, Dr.**
**Hasenheide 10**
**D-4150-Krefeld-Traar (DE)**
Erfinder: **Wangermann, Klaus, Dr.**
**Bethelstrasse 50**
**D-4150 Krefeld (DE)**
Erfinder: **Cohnen, Wolfgang, Dr.**
**Heymannstrasse 36**
**D-5090 Leverkusen (DE)**

(56) References cited:
**CHEMICAL ABSTRACTS, Band 72, Nr. 22, 1. Juni 1970, Seite 51, Zusammenfassung Nr. 112419m. Columbus, Ohio, US**

**CHEMICAL ABSTRACTS, Band 78, Nr. 8, 26. Februar 1973, Seite 39, Zusammenfassung Nr. 44542t, Columbus, Ohio, US**

EP 0 023 650 B2

Courier Press, Leamington Spa, England.

(56) References cited:
CHEMICAL ABSTRACTS, Band 92, Nr. 10, 10. März 1980, Seite 93, Zusammenfassung Nr. 78208t, Columbus, Ohio, US, L.V. SHIRYAEVA et al.: "Synthesis and study of aromatic sulfo compounds as antistatic coatings"
Rombusch und Maahs, Angew. Makromol. Chemie, 34 (1973), 55-70

**Beschreibung**

Verwendung von Alkali- und Erdalkalisalzen alkylsubstituierter aromatischer Sulfonsäuren, Phosphonsäuren und saurer Phosphorsäureester als interne Antistatika für Polycarbonatfolien

Gegenstand der vorliegenden Erfindung ist die Verwendung von Alkali- oder Erdalkalisalzen spezieller monomerer oder polymerer aromatischen Sulfonsäuren, monomerer aromatischer Phosphonsäuren oder monomerer aromatischer saurer Phosphorsäureester der Formeln (1), (2), (3), (4) oder (5) in Mengen von 0,05—10 Gew. % zur antistatischen Ausrüstung von Polycarbonatfolien.

Die als interne Antistatika wirksamen Salze bewirken eine Erniedrigung des Oberflächenwiderstandes, ohne die elektrischen Eigenschaften wie den spezifischen Durchgangswiderstand $\rho_D$, die Dielektrizitätszahl $\varepsilon$ oder den dielektrischen Verlustfaktor tan $\delta$ zu verändern und ohne das Polycarbonat zu schädigen.

Es ist bekannt, Folien oder Formkörper durch nachträgliche Behandlung mit einem externen Antistatikum antistatisch auszurürsten, beispielsweise durch Bestreichen einer Folie mit der Lösung einer antistatisch wirksamen Chemikalie, wobei der Oberflächenwiderstand $R_{OA}$ der Folie oder des Formteils reduziert und eine elektrostatische Aufladung vermindert oder ganz vermieden werden kann (vgl. GB—852 923 oder NE—64 11 681).

Derartige Folien zeigen jedoch nur kurzzeitig ein ausreichend antistatisches Verhalten, da durch Witterungs-einflüsse und äußerliche mechanische Einflüsse die oberflächlich aufgebrachte Beschichtung des antistatisch wirkenden Mittels wieder rasch entfernt werden kann.

Eine andere Möglichkeit, Folien oder Formteile antistatisch auszurüsten, besteht darin, eine leitfähige Schicht aus beispielsweise Ruß oder Metall aufzutragen. Dadurch werden die beschichteten Teile undurchsichtig und anfällig gegen jede äußere mechanische Beanspruchung, durch die leicht ein Abblättern oder Einreißen der Beschichtung verursacht werden kann.

Es ist ebenfalls bekannt, daß der Oberflächenwiderstand $R_{OA}$ von Folien durch Zumischen von Ruß in Gewichtsmengen bis zu 30% herabgesetzt werden kann.

Derartige schwarz eingefärbte Folien besitzen ein deutlich verschlechtertes mechanisches Eigenschaftsbild; -gleichfalls wird mit der Verminderung des Oberflächenwiderstandes $R_{OA}$ der Folie auch deren spezifischer Durchgangswiderstand $\rho_D$ reduziert, wodurch eine Verwendung der folie beispielsweise als Elektroisoliermaterial nicht mehr möglich ist.

Weiterhin ist bekannt, Sulfonsäuresalze (siehe DE—OS—26 48 128, DE—PS—19 30 257) bzw. Phosphonsäuresalze (vgl. DE—OS—21 49 311) zur Flammfesteinstellung von Polycarbonat zu verwenden.

Gemäß DE—PS—12 39 471 und US—PS—34 04 122 können partielle Phosphorsäureester zur Stabilisierung von Polycarbonat verwendet werden.

Überraschenderweise wurde gefunden, daß Polycarbonatfolien, die 0,05 bis 10 Gew.-% eines Alkali- oder Erdalkalisalzes einer monomeren aromatischen Sulfonsäure der allgemeinen Formel (1)

$$(R)_w—A—[—(SO_3)_nM]_y \qquad (1)$$

mit

A = Arylrest mit 1—4 aromatischen Ringen,
R = $C_4$—$C_{20}$-Alkyl, Alkenyl, $C_6$—$C_{20}$-Cycloalkyl, Cycloalkenyl,
M = Alkali bei n = 1,
M = Erdalkali bei n = 2,
y = eine ganze Zahl von 1—4,
w = eine ganze Zahl von 1—4

oder eines Alkali- oder Erdalkalisalzes einer polymeren aromatischen (Poly)-sulfonsäure der allgemeinen Formel (2)

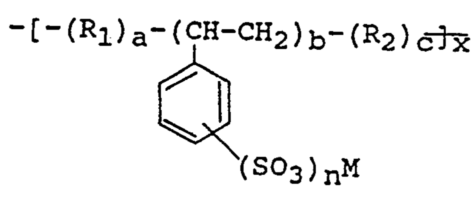

(2)

mit

$R_1$ = $C_2$—$C_6$-Alkylen,
$R_2$ = $R_1$ oder ein von $R_1$ unterschiedlicher $C_2$—$C_6$-Alkylenrest,
M, n entsprechend der Bedeutung der Formel (1)
a, b, c = ganze Zahlen $\geq$1, mit der Maßgabe, daß: b = 3 bis 30 und a + b + c = 100
x = eine Zahl der Größe, daß das polymere Salz ein mittleres Molekulargewicht (Gewichtsmittelmolekulargewicht) $M_w$ von 800—$10^3$ besitzt,

oder eines Alkali- oder Erdalkalisalzes einer monomeren sauren aromatischen Phosphonsäure der allgemeinen Formel (3)

$$(R)_w—A—[—(PO_3)M_p]_z \qquad (3)$$

mit

A, R, w entsprechend der Bedeutung der Formel (1)
M = Alkali bei p = 2,
M = Erdalkali bei p = 1,
z = 1 oder 2,

oder eines Alkali- oder Erdalkalisalzes eines monomeren sauren aromatischen Phosphorsäureesters der allgemeinen Formel (4)

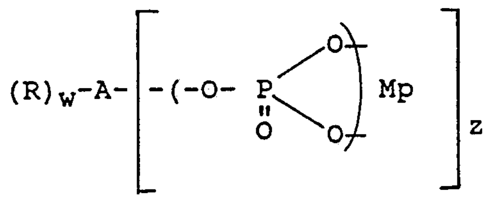
(4)

mit

A, R, M, p, w, z entsprechend der Bedeutung der Formel (3)

oder eines Alkali- oder Erdalkalisalzes eines monomeren sauren aromatischen Phosphorsäureesters der allgemeinen Formel (5)

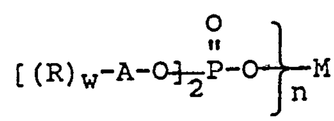
(5)

mit

A, R, n, w entsprechend der Bedeutung der Formel (1),

zugemischt enthalten, einen verminderten Oberflächenwiderstand $R_{OA}$ aufweisen, wobei die elektrischen Eigenschaften der Folie wie deren spezifischer Durchgangswiderstand $\rho_D$, deren Dielektrizitätszahl ε oder deren dielektrischer Verlustfaktor tan δ den Werten der additivfreien Folie entsprechen. Polycarbonatfolien mit einem Gehalt >0,05 Gew.-% der Salze der allgemeinen Formel (1) bis (5) sind elektrostatisch nicht mehr aufladbar (gemäß DIN 53 486).

Die vorstehend aufgeführten Gewichtsprozente an Zusätzen der Salze der Formeln (1), (2), (3), (4) oder (5) beziehen sich jeweils auf das Gesamtgewicht aus Polycarbonatharz und jeweiligem Salzzusatz der Salze der Formeln (1), (2), (3), (4) und (5).

Die erfindungsgemäß antistatisch ausgerüsteten Polycarbonatfolien zeigen keine wesentlichen Veränderungen ihrer elektrischen Eigenschaftswerte, insbesondere ihrer antistatischen Eigenschaften, unter Witterungs- oder mechanischer Beeinflüssung.

Bei einer Polycarbonatlösungsfolie, die beispielsweise 0,05 bis 0,07 Gew.-% eines Lithium- oder Calciumsalzes der allgemeinen Formel (1) bis (5) enthält, kann eine elektrostatische Aufladung nicht mehr festgestellt werden. Die Messung erfolgte nach DIN 53 486, wobei die Endaufladung $E_e$ der additivhaltigen Polycarbonatlösungsfolie jeweils vergleichend zu einer additivfreien Polycarbonatlösungsfolie nach 50 Reibungen mit Polyacrylnitril ("Dralon") oder Polyamid 6 ("Perlon") gemessen wurde (vgl. Beispiele der Tab).

Bei einer Polycarbonatfolie, die beispielsweise ein Lithium- oder Calciumsalz der allgemeinen Formel (1) bis (5) in einer Menge von >0,1 Gew.-% enthält, ist ein deutliches Absinken des Oberflächenwiderstandes $R_{OA}$ zu verzeichnen, der durch Erhöhung der Additivkonzentration bis auf Mengen 10 Gew.-% auf Werte von ca. $10^7$ Ω reduziert werden kann (der Oberflächenwiderstand der additivfreien Polycarbonatfolie beträgt $10^{14}$ Ω). Hierbei werden die eingangs genannten dielektrischen Eigenschaften der additivhaltigen Polycarbonatfolie ($\rho_D$, ε, tand δ) im Vergleich zu einer additivfreien Polycarbonatfolie nur unwesentlich verändert.

Unter aromatischen Polycarbonaten im Sinne dieser Erfindung werden Homopolycarbonate und Copolycarbonate verstenden denen z.B. ein oder mehrere der folgenden Bisphenole zugrundeliegen:

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,

Bis-(hydroxyphenyl)-sulfone,

α,α'-Bis-(hydroxyphenyl)-diisopropyl-benzole,

sowie deren kernalkylierte und kernhalogenierte Verbindungen. Diese und weitere geeignete aromatische Dihydroxyverbindungen sind z.B. in den US-Patentschriften 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 956, 2 211 977, der französischen Patentschrift 1 156 518 und in der Monographie "H. Schnell Chemistry and Physics of Polycarbonates, Interscience Publishers, New York, 1964" beschrieben.

Bevorzugte Bisphenole sind die der Formel 6

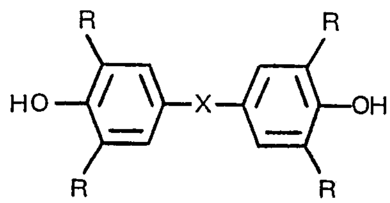

(6)

in der R gleich oder verschieden ist und H, $C_1$—$C_4$-Alkyl, Cl oder Br bedeutet und in der X eine Bindung, $C_1$—$C_8$-Alkylen, $C_2$—$C_8$-Alkyliden, $C_5$—$C_{15}$-Cycloalkylen, $C_5$—$C_{15}$-Cycloalkyliden, —$SO_2$— oder

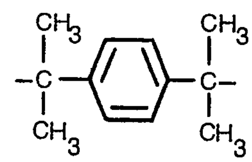

ist.

Beispiele für diese Bisphenole sind:

4,4'-Dihydroxydiphenyl
2,2-Bis-(4-hydroxyphenyl)-propan
2,4-Bis-(4-hydroxyphenyl)-2-methylbutan
1,1-Bis-(4-hydroxyphenyl)-cyclohexan
α,α'-Bis-(4-hydroxyphenyl)-p-diisopropylbenzol
2,2-Bis-(3-methyl-4-hydroxyphenyl)-propan
2,2-Bis-(3-chlor-4-hydroxyphenyl)-propan
Bis-(3,5-dimethyl-4-hydroxyphenyl)-methan
2,2-Bis-(3,5-dimethyl-4-hydroxyphenyl)-propan
Bis-(3,5-dimethyl-4-hydroxyphenyl)-sulfon
2,4-Bis-(3,5-dimethyl-4-hydroxyphenyl)-2-methylbutan
1,1-Bis-(3,5-dimethyl-4-hydroxyphenyl)-cyclohexan
α,α'-Bis-3,5-dimethyl-4-hydroxyphenyl)-p-diisopropylbenzol
2,2-Bis-(3,5-dichlor-4-hydroxyphenyl)-propan
2,2-Bis-(3,5-dibrom-4-hydroxyphenyl)-propan.

Besonders bevorzugte Bisphenole sind z.B.:

2,2-Bis-(4-hydroxyphenyl)-propan
2,2-Bis-(3,5-dimethyl-4-hydroxyphenyl)-propan
2,2-Bis-(3,5-dichlor-4-hydroxyphenyl)-propan
2,2-Bis-(3,5-dibrom-4-hydroxyphenyl)-propan
1,1-Bis-(4-hydroxyphenyl)-cyclohexan

Bevorzugte aromatische Polycarbonate sind solche, denen ein oder mehrere der als bevorrzugt genannten Bisphenole zugrundeliegen. Besonders bevorzugt werden Copolycarbonate, denen 2,2-Bis-(4-hydroxyphenyl)-propan und eines der anderen als besonders bevorzugt genannten Bisphenole zugrundeliegen. Besonders bevorzugt sind weiterhin Polycarbonate allein auf Basis von 2,2-Bis-(4-hydroxyphenyl)-propan oder 2,2-Bis-(3,5-dimethyl-4-hydroxyphenyl)-propan.

Die aromatischen Polycarbonate können nach bekannten Verfahren hergestellt werden, so z.B. nach dem Schmelzumesterungsverfahren aus Bisphenolen und Diphenylcarbonat und dem Zweiphasengrenzflächenverfahren aus Bisphenolen und phosgen, wie es in der obengenannten Literatur beschrieben ist.

Die aromatischen Polycarbonate können auch durch den Einbau geringer Mengen an Polyhydroxyverbindungen, z.B. 0,05—2,0 Mol-% (bezogen auf die eingesetzten Bisphenole), verzweigt sein. Polycarbonate dieser Art sind z.B. in den deutschen Offenlegungsschriften 1 570 533, 1 595 762, 2 116 974, 2 113 347, der

britischen Patentschrift 1 079 821 und in der US-Patentschrift 3 544 514 beschrieben. Einige der verwendbaren Polyhydroxyverbindungen sind beispielsweise Phloroglucin, 4,6 - Dimethyl - 2,4,6 - tri - (4 - hydroxyphenyl) - hepten - 2,4,6 - Dimethyl - 2,4,6 - tri(4 - hydroxyphenyl) - heptan, 1,3,5 - Tri - (4 - hydroxyphenyl) - benzol, 1,1,1 - Tri - (4 - hydroxyphenyl) - ethan, Tri - (4 - hydroxyphenyl) - phenylmethan, 2,2 - Bis[4,4 - Bis(4 - hydroxyphenyl) - cyclohexyl]propan, 2,4 - Bis - (4 - hydroxyphenyl - isopropyl) - phenol, 2,6 - Bis - (2' - hydroxy - 5' - methyl - benzyl) - 4 - methyl - phenol, 2,4 - Dihydroxybenzoesäure, 2 - (4 - hydroxyphenyl) - 2 - (2,4 - dihydroxyphenyl) - preopan und 1,4 - Bis - (4',4'' - dihydroxytriphenyl - methyl) - benzol.

Die aromatischen Polycarbonate sollen in der Regel Molekulargewichte $M_w$ von 10 000 bis über 200 000, vorzugsweise von 20 000 bis 80 000 haben.

Als geeignete Alkali- oder Erdalkalisalze im Sinne der Erfindung werden solche Lithium-, Natrium-, Kalium-, Calcium-, Magnesium- oder Bariumsalze der allgemeinen Formel (1) bis (5) verstanden, deren wäßrige Lösungen oder deren Suspensionen in Wasser einen pH-Wert von 4,5—8,5, insbesondere jedoch einen pH-Wert von 5,5—8,0, aufweisen. Bevorzugt werden die Lithium- und Calciumsalze der allgemeinenen Formeln (1) bis (5). Besonders bevorzugt werden monomere aromatische Sulfonsäuresalze der allgemeinen Formel (1.1)

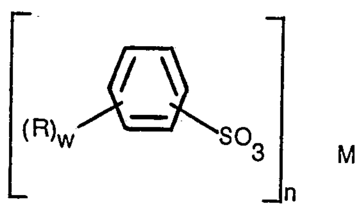

(1.1)

mit

$R = C_4—C_{20}$-Alkyl, Alkenyl,

M = Li oder Ca

Weiterhin Lithium- oder Calciumsalze von sulfonierten Copolymeren des Styrols mit $C_2—C_6$-Alkenen mit einem Styrolanteil von 3 bis 30 Gew.-%, sowie monomere aromatische Phosphonsäuresalze der allgemeinen Formel (3.1)

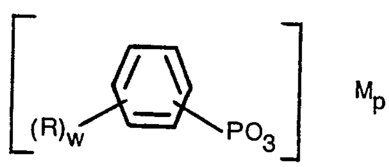

(3.1)

mit

$R = C_4—C_{20}$-Alkyl, Alkenyl,

M = Li oder Ca.

Insbesondere bevorzugt werden

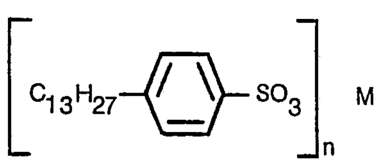

mit

M = Li oder Ca

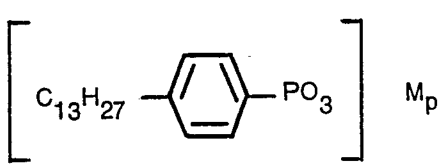

mit

M = Li oder Ca

sowie

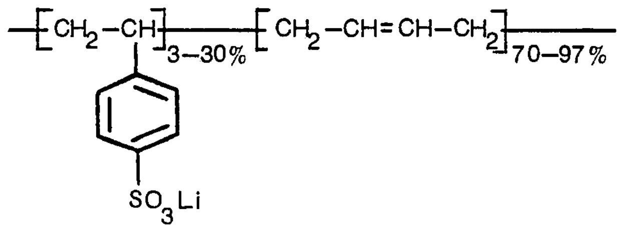

mit einem Molgewicht von $\overline{M}_w$ = 10 000—800 000 (mittleres Gewichtsmittelmolekulargewicht).

Die Herstellung der erfindungsgemäß einsetzbaren Salze der Formeln (1) bis (5) ist, soweit nicht literaturbekannt, durch Neutralisation der entsprechenden freien Säuren mit den entsprechenden Alkali- bzw. Erdalkalihydroxiden in bekannter Weise, etwa in $H_2O$ oder $H_2O$/Alkoholgemischen herstellbar.

Die antistatisch ausgerüsteten Polycarbonatfolien lassen sich nach dem Gießverfahren aus ihrer Lösung in Methylenchlorid oder in einem Methylenchlorid-Chloroformgemisch herstellen, wobei das Antistatikadditiv der allgemeinen Formel (1) bis (5) in der benötigten Menge in dem Polycarbonatlösungsmittel gelöst oder suspendiert der Polycarbonatlösung hinzugegeben wird. Dieses Verfahren der Folienherstellung wird beispielsweise in der DE—AS—12 74 274 oder der DE—OS—25 17 032 beschrieben.

Es ist gleichfalls möglich, nach dem Reaktions- und Waschprozess der Polycarbonatherstellung das Antistatikadditiv in der benötigten Menge in die Polycarbonatlösung einzutragen und nach dem Aufkonzentrieren dieser Lösung über einen Eindampfextruder zu Granulat oder über eine Breitschlitzdüse zu einer Extrusionsfolie aufzuarbeiten.

Die Herstellung der antistatischen Polycarbonatfolien kann ebenfalls nach dem Extrusionsverfahren erfolgen, wobei das Einmischen des Antistatikadditivs der allgemeinen Formel (1) bis (5) in der gewünschten Menge in die Polycarbonatschmelze auf einem handelsüblichen Extruder mit einer Entgasungszone erfolgt, der über einen Adapter mit einer Breitschlitzdüse verbunden ist. Nach Austritt der noch plastischen Folien aus der Düse werden diese auf einem Kühlrost, einer chillroll-Anlage oder einem Dreiwalzenstuhl auflaufen lassen, wobei die Temperatur des jeweiligen Polymeren abgesenkt wird. Dabei erstarren die Folien und können aufgewickelt werden. (Siehe beispielsweise DT—OS—2 437 508).

Nach einem ebenfalls gebräuchlichen Herstellungsverfahren kann man das Antistatikadditiv der allgemeinen Formeln (1) bis (5) mit einer Teilmenge des aromatischen Polycarbonats zu einem Konzentrat vermischen, um dieses Konzentrat anschließend mit der Restmenge an aromatischem Polycarbonat in einem Extrusionsgang zu vereinigen, wobei man die antistatischen Polycarbonatfolien mit dem berechneten Gehalt des Antistatikadditivs der allgemeinen Formel (1) bis (5) erhält.

Für die Herstellung der erfindungsgemäßen Extrusionsfolien lassen sich die üblichen Breitschlitzdüsen verwenden. Für blasverformtes Polycarbonat werden die üblichen Blasköpfe verwendet.

Die antistatischen Polycarbonatfolien können außerdem andere Materialien wie Pigmente, thermische Stabilisatoren, Ultraviolettlichtstabilisatoren, Formtrennmittel, Glasfasern und verstärkende Füllstoffe wie beispielsweise Glimmer, Talk, Gesteinswolle, Dolomit enthalten (vgl. dazu auch DE—OS—27 21 887). Die erfindungsgemäß antistatisch ausgerüsteten Polycarbonatfolien lassen sich auf den bekannten Polycarbonateinsatzgebieten verwendeten, insbesondere jedoch auf den Elektrosektor, dem Verglasungssektor, insbesondere zur Herstellung von Elektroisolierfolien oder Streulichtfolien. Die erfindungsgemäß antistatisch ausgerüsteten Polycarbonatfolien sind vor allem auch in Betrieben verwendbar, als Türvorhang, in denen eine elektrostatische Entladung als Zündfunke für brennbare Materialien vermieden werden muß, sowie als Sonnenschirme für Glasfenster. Gegenstand der vorliegenden Erfindung ist somit auch die Verwendung der erfindungsgemäß antistatisch ausgerüsteten Polycarbonatfolien zur Herstellung von Türvorhängen oder Sonnenschirmen für Glasfenster.

Die erfindungsgemäß antistatisch ausgerüsteten Polycarbonatfolien können auch für Sonnenschutzschirme verwendet werden, weil es sehr wichtig ist, daß Polycarbonatfilme für derartige Verwendungen antistatisch sind, um während der Herstellung Schrumpfung zu verhindern, und um während des Gebrauchs Verstaubung zu verhindern.

Die in den Beispielen verwendeten Polycarbonatlösungsfolien besitzen eine Schichtdicke von 50 µm, bestehen aus einem Homopolycarbonat auf Basis von 2,2-Bis-(4-hydroxyphenyl)-propan mit einem mittleren Gewichtsmittelmolekulargewicht $\overline{M}_w$ = 57 000 und einer relativen Lösungsviskosität von $\eta$ rel = 1,57 ("Makrofol 5705"), gemessen in 0,5 %iger Lösung in Methylenchlorid und wurden nach dem Gießverfahren aus einer Methylenchloridlösung hergestellt.

Die erfindungsgemäßen Antistatikadditive wurden in Methylenchlorid gelöst oder suspendiert und der Polycarbonatlösung vor dem Vergießen zugefügt.

Die in den nachfolgenden Beispielen beschriebene Prüfung des Oberflächenwiderstandes $R_{OA}$ erfolgte nach DIN 53 482, die Prüfung der Endaufladung $E_e$, der Folien erfolgte DIN 53 486 bei 23°C und einer relativen Luftfeuchte von 50%. Die Beispiele 1, 2, 8 und 9 sind Vergleichsbeispiele.

(Siehe die Tabellen, Seiten 7 und 8)

| Bsp. | Additiv | Additiv-menge (Gew.-%) | Reibungs-partner (50 Reibungen) | Endauf-ladung $E_e$ (V/cm) | Oberflächen-widerstand $R_{OA}$ x | Halbwerts-zeit der zeit der $t_H$ (s) | Spez. Durch-gangs-widerstand (Ω·cm) |
|---|---|---|---|---|---|---|---|
| 1 | — | — | Polyacryl-nitril-Gewebe | +24000 | $10^{14}$ | 3600 | $>10^{15}$ |
| 2 | 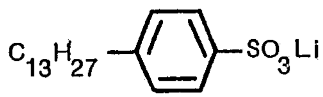 | 0,01 | " | 1000 | $10^{14}$ | 160 | " |
| 3 | " | 0,05 | " | <100 | $10^{12}$—$10^{13}$ | 20 | " |
| 4 | " | 0,10 | " | " | $10^{11}$ | — | " |
| 5 | " | 0,20 | " | " | $10^{10}$ | — | " |
| 6 | " | 1,0 | " | " | $10^{9}$—$10^{10}$ | — | " |
| 7 | " | 10,0 | " | " | $10^{8}$ | — | " |
| 8 | — | — | Polyamid-6-Gewebe | +30000 | $10^{14}$ | 3600 | " |
| 9 | 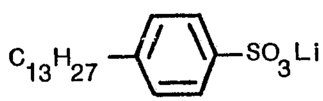 | 0,01 | " | 1200 | $10^{14}$ | 180 | " |
| 10 | " | 0,05 | " | 500 | $10^{12}$—$10^{13}$ | 25 | " |
| 11 | " | 0,10 | " | <100 | $10^{11}$ | — | " |
| 12 | " | 0,20 | " | " | $10^{10}$ | — | " |
| 13 | " | 1,0 | " | " | $10^{9}$—$10^{10}$ | — | " |

(Siehe die Tabellen, Seiten 7 und 8)

| Bsp. | Additiv | Additivmenge (Gew.-%) | Reibungspartner (50 Reibungen) | Endaufladung $E_e$ (V/cm) | Oberflächenwiderstand $R_{OA}$ x | Halbwertszeit der zeit der $t_H$ (s) | Spez. Durchgangswiderstand (Ω·cm) |
|---|---|---|---|---|---|---|---|
| 14 | 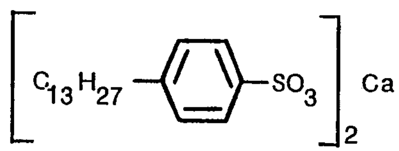 | 0,1 | Polyacrylnitrilgewebe | <100 | $10^{12}$ | — | $>10^{15}$ |
| 15 | 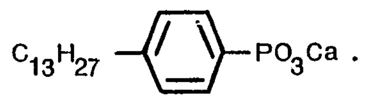 | 0,1 | " | " | $10^{12}$ | — | $>10^{15}$ |
| 16 | 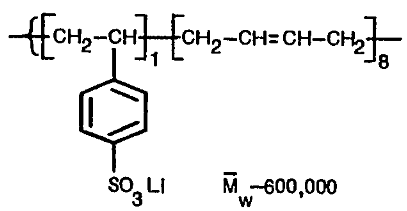 $\bar{M}_w$ ~600,000 | 0,1 | " | " | $10^{12}$ | — | $>10^{15}$ |
| 17 | 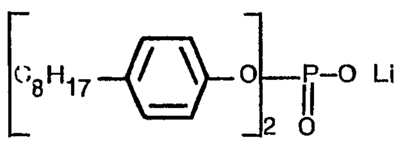 | 0,1 | " | " | $10^{12}$ | — | $>10^{15}$ |

**Patentansprüche**

1. Verwendung von 0,05 bis 10 Gew.-%, bezogen auf Gesamtgewicht aus Polycarbonat und Salzzusatz, eines Alkali- oder Erdalkalisalzes — dessen wäßrige Lösung oder dessen Suspension in Wasser einen Ph-Wert von 4,5 bis 8,5 aufweist — einer monomeren aromatischen Sulfonsäure der allgemeinen Formel (1)

$$(R)_w—A—[—(SO_3)_nM]_y \qquad (1)$$

mit

A = Arylrest mit 1—4 aromatischen Ringen,
R = $C_4$—$C_{20}$-Alkyl, Alkenyl, $C_6$—$C_{20}$-Cycloalkyl, Cycloalkenyl,
M = Alkalimetall und n = 1,
M = Erdalkalimetall und n = 2,
y = eine ganze Zahl von 1 bis 4,
w = eine ganze Zahl von 1 bis 4

oder einer polymeren aromatischen (Poly)-sulfonsäure der allgemeinen Formel (2)

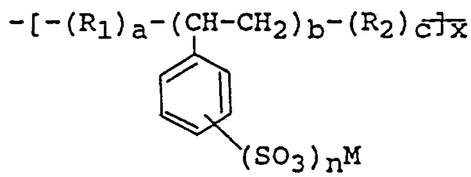

(2)

mit

$R_1$ = $C_2$—$C_6$-Alkylen
$R_2$ = $R_1$ oder ein von $R_1$ unterschiedlicher $C_2$—$C_6$-Alkylenrest
M, n entsprechend der Bedeutung der Formel (1),
a, b, c = ganze Zahlen ≥1, mit der Maßgabe, daß b = 3 bis 30 und a + b + c = 100,
x = eine Zahl der Größe, daß das polymere Salz ein mittleres Molekulargewicht (Gewichtsmittelmolekulargewicht) $M_w$ von 800—$10^3$ besitzt,

oder einer monomeren aromatischen Phosphonsäure der allgemeinen Formel (3)

$$(R)_w—A—[—(PO_3)M_p]_z \qquad (3)$$

mit

A, R, w entsprechend der Bedeutung der Formel (1),
M = Alkalimetall und p = 2,
M = Erdalkalimetall und p = 1,
z = 1 oder 2,

oder eines monomeren sauren aromatischen Phosphorsäureesters der allgemeinen Formel (4)

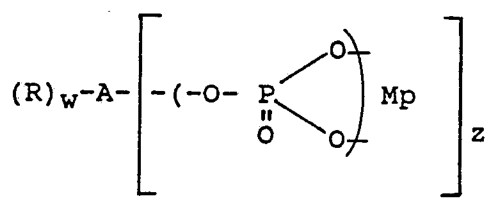

(4)

mit

A, R, M, p, w, z entsprechend der Bedeutung der Formel (3),

oder eines monomeren sauren aromatischen Phosphorsäureesters der allgemeinen Formel (5)

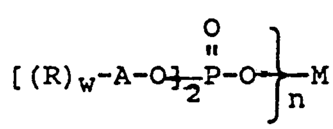

(5)

mit

A, R, n, w entsprechend der Bedeutung der Formel (1), zur antistatischen Ausrüstung von Polycarbonatfolien.

2. Verwendung von Natrium-, Kalium-, Lithium-, Magnesium-, Calcium- oder Bariumsalzen der allgemeinen Formeln (1) bis (5) in Mengen von 0,05 bis 10 Gew.-%, bezogen auf Gesamtgewicht aus Polycarbonat und Salzzusatz gemäß Anspruch 1 zur Herstellung von antistatischen Polycarbonatfolien.

3. Verwendung von Lithium-tridecylbenzolsulfonat in Mengen von 0,05 bis 10 Gew.-%, bezogen auf das Gesamtgewicht aus Polycarbonat und Salzzusatz, als interne Antistatika zur Herstellung von antistatischen Polycarbonatfolien.

4. Verwendung der antistatischen Polycarbonatfolien gemäß Ansprüche 1 bis 3 zur Herstellung von Türvorhängen oder Sonnenschirmen für Glasfenster.

**Revendications**

1. Utilisation de 0,05 à 10% en poids, par rapport au poids total de polycarbonate et d'additif salin, d'un sel alcalin ou alcalino-terreux dont la solution aqueuse ou la suspension dans l'eau présente un pH de 4,5 à 8,5, d'un acide sulfonique aromatique monomère de formule générale (1)

$$(R)_w—A—[(SO_3)_nM]_y \qquad (1)$$

dans laquelle

A = reste aryle à 1—4 noyaux aromatiques,

R = alkyle en $C_4$—$C_{20}$, alcényle, cycloalkyle en $C_6$—$C_{20}$, cycloalcényle,

M = métal alcalin et n = 1,

M = métal alaclano-terreux et n = 2,

y = un nombre entier de 1 à 4,

w = un nombre entier de 1 à 4,

ou d'un acide (poly)-sulfonique aromatique polymère de formule générale (2)

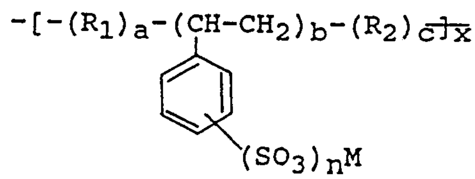

(2)

dans laquelle

$R_1$ = alcylène en $C_2$—$C_6$

$R_2$ = $R_1$ ou un reste alcylène en $C_2$—$C_6$ différent de $R_1$,

M, n correspondent à la signification de la formule (1),

a, b, c = des nombres entiers ≥1, avec la condition que b = 3 à 30 et a + b + c = 100,

x = un nombre entier de grandeur telle que le sel polymère possède un poids moléculaire moyen (poids moléculaire moyen en poids) $\overline{M}_w$ de 800—$10^3$,

ou d'un acide phosphonique aromatique monomère de formule générale (3)

$$(R)_w—A—[(PO_3)M_p]_z \qquad (3)$$

dans laquelle

A, R, w correspondent à la signification de la formule (1),

M = métal alcalin et p = 2,

M = métal alcalino-terreux et p = 1,

z = 1 ou 2,

ou d'un ester phosphorique aromatique acide monomère de formule générale (4)

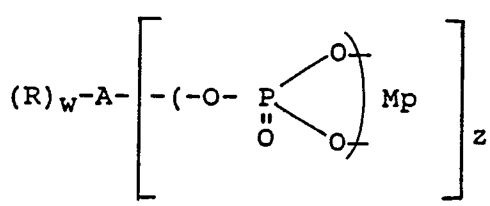

(4)

dans laquelle A, M, R, p, w, z correspondent à la signification de la formule (3),

ou d'un ester phosphorique aromatique acide monomère de formule générale (5)

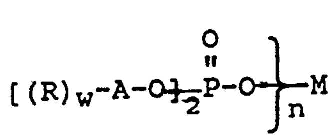

(5)

dans laquelle

A, R, n, w correspondent à la signification de la formule (1), pour l'apprêtage antistatique de feuilles de polycarbonate.

2. Utilisation de sels de sodium, potassium, lithium, magnésium, calcium ou baryum des formules générales (1) à (5) en quantités de 0,05 à 10% en poids, par rapport au poids total du polycarbonate et de l'additif salin, selon la revendication 1, pour la fabrication de feuilles de polycarbonates antistatiques.

3. Utilisation de tridécylbenzènesulfonate de lithium en quantités de 0,05 à 10% en poids, par rapport au poids total du polycarbonate et de l'additif salin, comme antistatique interne pour la fabrication de feuilles de polycarbonates antistatiques.

4. Utilisation des feuilles de polycarbonates antistatiques selon les revendications 1 à 3, pour la fabrication de portes rideaux ou d'écrans solaires pour fenêtres vitrées.

**Claims**

1. Use of 0.01 to 10% by weight, relative to the total weight of polycarbonate and salt added, of an alkali metal salt or alkaline earth metal salt — the aqueous solution of which or the suspension of which in water has a pH value of 4.5 to 8.5 — of a monomeric aromatic sulphonic acid of the general formula (1)

$$(R)_w—A-[(SO_3)_nM]_y \qquad (1)$$

in which
A = an aryl radical containing 1—4 aromatic rings,
R = $C_4$—$C_{20}$-alkyl, alkenyl, $C_6$—$C_{20}$-cycloalkyl or cycloalkenyl,
M = an alkali metal and n = 1,
M = an alkaline earth metal and n = 2,
y = an integer from 1 to 4, and
w = an integer from 1 to 4,
or of a polymeric aromatic (poly)-sulphonic acid of the general formula (2)

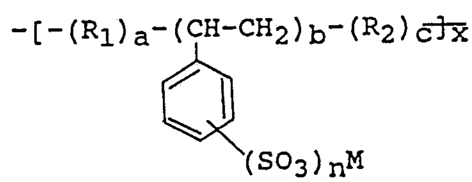

(2)

in which
$R_1$ = $C_2$—$C_6$-alkylene,
$R_2$ = $R_1$ or a $C_2$—$C_6$-alkylene radical which differs from $R_1$,
M and n have the same meaning as for formula (1),
a, b and c = integers ≥1, with the proviso that b = 3 to 30 and a + b + c = 100,
x = a number of a magnitude such that the polymeric salt has an average molecular weight (weight-average molecular weight $\overline{M}_w$ of 800 to $10^6$,
or of a monomeric aromatic phosphonic acid of the general formula (3)

$$(R)_w—A-[(PO_3)M_p]_z \qquad (3)$$

in which
A, R and w have the same meaning as for formula (1),
M = an alkali metal and p = 2,
M = an alkaline earth metal and p = 1, and
z = 1 or 2,
or of a monomeric partial aromatic phosphoric acid ester of the general formula (4)

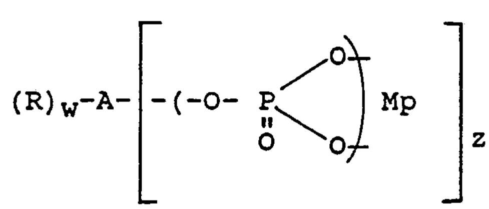

(4)

in which
A, M, r, p, w and z have the same meaning as for formula (3),

or of a monomeric partial aromatic phosphoric acid ester of the general formula (5)

$$\left[ [(R)_w\text{-}A\text{-}O]_2 \overset{\displaystyle O}{\overset{\|}{P}}\text{-}O \right]_n M \qquad (5)$$

in which

A, R, n and w have the same meaning as for formula (1), for providing polycarbonate films with an antistatic finish.

2. Use, according to Claim 1, of sodium salts, potassium salts, lithium salts, magnesium salts, calcium salts or barium salts of the general formulae (1) to (5) in amounts of 0.05 to 10% by weight, relative to the total weight of polycarbonate and salt added, for the production of antistatic polycarbonate films.

3. Use of lithium tridecylbenzenesulphonate in amounts of 0.05 to 10% by weight, relative to the total weight of polycarbonate and salt added, as an internal antistatic agent for the production of antistatic polycarbonate films.

4. Use of the antistatic polycarbonate films according to Claims 1 to 3 for producing curtains for doorways or sun blinds for glass windows.